# EUROPEAN PATENT SPECIFICATION

(11) **EP 2 883 771 B1**
(45) Date of publication and mention of the grant of the patent: **11.04.2018**
(21) Application number: 13197415.6
(22) Date of filing: 16.12.2013
(51) Int. Cl.: B60W 40/068, B60R 21/013, B60R 21/0136, B60T 8/172

(54) **Vehicle tyre to road friction value estimation arrangement**
Anordnung zur Schätzung des Reibwerts zwischen Fahrzeugreifen und Straße
Pneu de véhicule à système d'estimation de la valeur de frottement de la route

(43) Date of publication of application: 17.06.2015
(73) Proprietor: Volvo Car Corporation, 40 531 Göteborg (SE)
(72) Inventor: Jonasson, Mats, 43349 Partille (SE); Jacobson, Bengt, 435 38 Mölnlycke (SE); Yang, Derong, 42137 Västra Frölunda (SE); Gordon, Tim, Lincoln, LN6 3DA (GB)
(74) Representative: Volvo Car Corporation

(56) References cited:
- EP-A1- 1 481 861
- DE-A1- 19 811 865
- JP-A- H09 281 030
- US-A1- 2001 029 419
- US-A1- 2008 147 280
- US-B2- 7 284 769

## Description

### TECHNICAL FIELD

The present invention relates to a vehicle tyre to road friction value estimation arrangement. The present invention also relates to post impact vehicle control system comprising a vehicle tyre to road friction value estimation arrangement and a vehicle comprising a post impact vehicle control system and a method of estimating a vehicle tyre to road friction value.

### BACKGROUND

Today vehicles comprise a considerable number of safety improving control systems or arrangements such as active safety systems, anti-lock vehicle braking system (ABS), Electronic Stability Control system (ESC), autonomous intelligent cruise control, and collision avoidance systems. Many of these safety improving control systems or arrangements would show a significant improvement in their respective task if they were provided with a value representative of an accurate estimation of a host vehicle tyre to road friction value. However, during normal driving of a vehicle, estimation of such a host vehicle tyre to road friction value is a challenging problem. The document US 7 284 769 B2 relates to a method and apparatus for sensing a crash of a vehicle in which acceleration and angular motion of the vehicle are measured and analysed by a processor to determine whether a crash is occurring. A deployable occupant protection device is deployed by a processor when deployment criteria are satisfied. The processor may embody a pattern recognition technique for analysing the measured acceleration and angular motion of the vehicle and determine whether deployment of the occupant protection device is beneficial. In the document, it is mentioned that an inertial measurement unit is placed at an appropriate location such as the roof of a truck or trailer and used to monitor the motion over time of the truck or trailer. Based on the assumption that the road introduces certain statistically determinable disturbances into the vehicle, a monitoring over time can give a good idea of the mass of the vehicle, the load distribution and its moments of inertia. It can also give some idea as to the coefficient of friction on the tires against the roadway.

Attempts have been made to provide arrangements capable of providing estimations of a host vehicle tyre to road friction value. Such an arrangement may comprise a temperature monitoring unit and an imaging unit arranged to capture images of the road ahead of a hosting vehicle to thereby assess a level of host vehicle tyre to road friction. Some arrangements utilizes sensors for measuring yaw rate, lateral acceleration and wheel speed to assess a level of host vehicle tyre to road friction. One such arrangement is described in the document US 6508102 B2 where a host vehicle tyre to road friction value is estimated while the host vehicle is accelerating, braking or turning. All of the above mentioned types of vehicle tyre to road friction value estimation arrangements are associated with drawbacks such as a significant uncertainty in the estimation of vehicle tyre to road friction value. In many cases, such uncertainty is due to the fact that wheel slip has to occur to be able of estimate vehicle tyre to road friction value by means of sensors for measuring yaw rate, lateral acceleration and wheel speed. Thus, in view of the mentioned drawbacks with the prior art arrangements, there is a need for a vehicle tyre to road friction value estimation arrangement with improved accuracy in an ability to estimate a host vehicle tyre to road friction value.

### SUMMARY

An object of the present invention is to provide a vehicle tyre to road friction value estimation arrangement with improved accuracy in an ability to estimate a host vehicle tyre to road friction value.

According to an aspect of the invention, the object is achieved by a vehicle tyre to road friction value estimation arrangement comprising a vehicle impact detecting unit, a vehicle wheel axle lateral acceleration estimation unit, and a processing unit, where the vehicle impact detecting unit is arranged to detect occurrence of an impact, having a magnitude higher than a predetermined threshold impact magnitude, between a vehicle hosting the arrangement and an external object, and to transmit an impact signal indicative of the occurrence of such an impact to the processing unit, and where the vehicle wheel axle lateral acceleration estimation unit is arranged to, upon a detected occurrence of such an impact, estimate or measure a lateral acceleration of at least one vehicle wheel axle of the host vehicle, and to transmit a lateral acceleration signal indicative of the estimated or measured lateral acceleration to the processing unit, where the processing unit is arranged to process the lateral acceleration signal to determine an occurrence of a shift in direction of the estimated or measured lateral acceleration, and upon determining an occurrence of such a shift in direction of estimated or measured lateral acceleration, process the lateral acceleration signal to obtain a subsequent peak lateral acceleration estimate and to calculate an estimate of a host vehicle tyre to road friction value based on the thus obtained peak lateral acceleration estimate.

During an impact, having a magnitude higher than a predetermined threshold impact magnitude, between a vehicle hosting the arrangement and an external object, lateral tyre forces can be assumed to be saturated. However, during such an impact, there is also an impact force acting on the host vehicle, apart from vehicle tyre to road friction forces. Still, immediately after such an impact, lateral tyre forces can be assumed to be saturated and no other forces are acting on the vehicle. This event is detected by the processing unit determining an occurrence of a shift in direction of the estimated or measured lateral acceleration. Since the processing unit is arranged to process the lateral acceleration signal to obtain a subsequent peak lateral acceleration estimate and to calculate an estimate of a host vehicle tyre to road friction value based on the thus obtained peak lateral acceleration estimate, a vehicle tyre to road friction value estimation arrangement is provided with improved accuracy in an ability to estimate a host vehicle tyre to road friction value.

As a result, the above mentioned object is achieved.

According to some embodiments, the vehicle wheel axle lateral acceleration estimation unit comprises a lateral acceleration measuring unit arranged to measure a host vehicle lateral acceleration, and a yaw acceleration measuring unit arranged to measure a host vehicle yaw acceleration. In such embodiments, the vehicle wheel axle lateral acceleration estimation unit is arranged to estimate lateral acceleration of at least one wheel axle of the host vehicle through processing values representative of host vehicle lateral acceleration and host vehicle yaw acceleration. Thereby, an arrangement is provided capable of an accurate estimation of lateral acceleration of one, or both, wheel axles of the hosting vehicle. Further, many of today vehicles comprise a lateral acceleration measuring unit and a yaw acceleration measuring unit. Accordingly, in such vehicles, already existing components can be used in the implementation of some embodiments.

According to some embodiments, the vehicle wheel axle lateral acceleration estimation unit is arranged to estimate the lateral acceleration of at least one wheel axle of the host vehicle through subtracting from a value representative of a measured host vehicle lateral acceleration a value representative of a product of a longitudinal distance between the lateral acceleration measuring unit and the at least one wheel axle multiplied with measured host vehicle yaw acceleration. Thereby, an arrangement is provided capable of an accurate estimate of lateral acceleration of at least one wheel axle of the host vehicle.

According to some embodiments, the processing unit is arranged to calculate an estimate of the host vehicle tyre to road friction value of at least one wheel axle as a quota between the peak lateral acceleration estimate for that wheel axle and a gravitational constant. Thereby, an arrangement is provided capable of an accurate estimate of the host vehicle tyre to road friction value of at least one wheel axle.

According to an aspect of the invention, the object is achieved by a post impact vehicle control system comprising a vehicle tyre to road friction value estimation arrangement according to some embodiments. Again, since the post impact vehicle control system comprises a vehicle tyre to road friction value estimation arrangement according to some embodiments, a post impact control system is provided with improved accuracy in an ability to estimate a host vehicle tyre to road friction value

As a result, the above mentioned object is achieved.

Also, since the post impact vehicle control system comprises a vehicle tyre to road friction value estimation arrangement according to some embodiments, the post impact vehicle control system can, after an impact having a magnitude higher than a predetermined threshold impact magnitude, between a vehicle hosting the arrangement and an external object, utilize an accurate host vehicle tyre to road friction value estimate. Thereby, the post impact vehicle control system may be provided with improved ability to avoid secondary impacts.

According to an aspect of the invention, the object is achieved by a vehicle comprising a post impact vehicle control system according to some embodiments. Thereby, a vehicle is provided with improved accuracy in an ability to estimate a host vehicle tyre to road friction value

As a result, the above mentioned object is achieved.

According to an aspect of the invention, the object is achieved by a method of estimating a vehicle tyre to road friction value using a vehicle tyre to road friction value estimation arrangement comprising a vehicle impact detecting unit, and a vehicle wheel axle lateral acceleration estimation unit, and a processing unit, where the method comprises;
- detecting occurrence of an impact, having a magnitude higher than a predetermined threshold impact magnitude, between a vehicle hosting the arrangement and an external object, using the vehicle impact detecting unit, and
- transmitting an impact signal indicative of the occurrence of such an impact to the processing unit, and
- estimating or measuring a lateral acceleration of at least one vehicle wheel axle of the host vehicle, upon a detected occurrence of such an impact, using the vehicle wheel axle lateral acceleration estimation unit, and
- transmitting a lateral acceleration signal indicative of the estimated or measured lateral acceleration to the processing unit, and
- processing the lateral acceleration signal to determine an occurrence of a shift in direction of the estimated or measured lateral acceleration, using the processing unit, and
- processing the lateral acceleration signal to obtain a subsequent peak lateral acceleration estimate upon determining an occurrence of such a shift in direction of the estimated or measured lateral acceleration, using the processing unit, and
- calculating an estimate of a host vehicle tyre to road friction value based on the thus obtained peak lateral acceleration estimate, using the processing unit.

Again, since the method comprises calculating an estimate of a host vehicle tyre to road friction value based on the thus obtained peak lateral acceleration estimate, using the processing unit, a method is provided with improved accuracy in an ability to estimate a host vehicle tyre to road friction value.

As a result, the above mentioned object is achieved.

Further features of, and advantages with, the present invention will become apparent when studying the appended claims and the following detailed description. Those skilled in the art will realize that the different features described may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a vehicle tyre to road friction value estimation arrangement 1, and
Fig. 2 illustrates a plot of lateral acceleration a_{y} of vehicle front wheel axle 13.1 of the host vehicle 9 versus time t during an impact with the external object 11 illustrated in Fig. 1, and
Fig. 3 illustrates a method of estimating a vehicle tyre to road friction value.

### DETAILED DESCRIPTION

Embodiments herein will now be described more fully with reference to the accompanying drawings, in which example embodiments are shown. Disclosed features of example embodiments may be combined as readily understood by one of ordinary skill in the art. Like numbers refer to like elements throughout.

Well-known functions or constructions will not necessarily be described in detail for brevity and/or clarity.

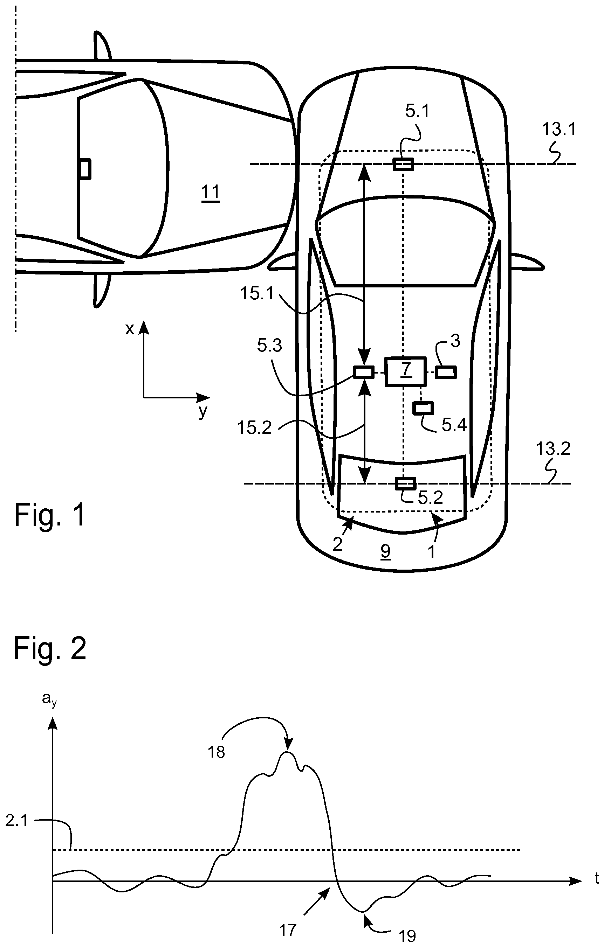

Fig. 1 illustrates a vehicle tyre to road friction value estimation arrangement 1 comprising a vehicle impact detecting unit 3, a vehicle wheel axle lateral acceleration estimation unit 5.1, 5.2, 5.3, 5.4, and a processing unit 7.

The vehicle impact detecting unit 3 is arranged to detect occurrence of an impact, having a magnitude higher than a predetermined threshold impact magnitude, between a vehicle 9 hosting the arrangement 1 and an external object 11, and to transmit an impact signal indicative of the occurrence of such an impact to the processing unit 7.

The vehicle wheel axle lateral acceleration estimation unit 5.1, 5.2, 5.3, 5.4 is arranged to, upon a detected occurrence of such an impact, estimate or measure a lateral acceleration of at least one vehicle wheel axle 13.1, 13.2 of the host vehicle 9, and to transmit a lateral acceleration signal indicative of the estimated or measured lateral acceleration to the processing unit 7.

The processing unit 7 is arranged to process the lateral acceleration signal to determine an occurrence of a shift in direction of the estimated or measured lateral acceleration, and upon determining an occurrence of such a shift in direction of estimated or measured lateral acceleration, process the lateral acceleration signal to obtain a subsequent peak lateral acceleration estimate and to calculate an estimate of a host vehicle tyre to road friction value based on the thus obtained peak lateral acceleration estimate. Thereby, an accurate estimation of a host vehicle tyre to road friction value can be obtained.

The vehicle impact detecting unit 3 may comprise one or more accelerometers arranged to measure host vehicle 9 acceleration in one or more directions to thereby be able to detect occurrence of an impact, having a magnitude higher than a predetermined threshold impact magnitude, between a vehicle 9 hosting the arrangement and an external object 11. Such one or more accelerometers may be accelerometers specifically arranged for the purpose of detecting occurrence of an impact, or may be accelerometers being comprised in units or systems having further objects and/or functions. One of such units may be the vehicle wheel axle lateral acceleration estimation unit. That is, the vehicle wheel axle lateral acceleration estimation unit may be arranged to detect occurrence of an impact, having a magnitude higher than a predetermined threshold impact magnitude, between a vehicle 9 hosting the arrangement and an external object 11. The predetermined threshold impact magnitude may correspond to a host vehicle acceleration of approximately 1 g, i.e. approximately 9.8 m/s².

In Fig.1, a longitudinal direction x and a lateral direction y are illustrated. The longitudinal direction x corresponds to a longitudinal direction of the host vehicle 9, i.e. a direction coinciding with an intended direction of travel of the host vehicle 9. The lateral direction y corresponds to a lateral direction of the host vehicle 9, i.e. a direction being perpendicular to the longitudinal direction x of the host vehicle and thus also perpendicular to a direction coinciding with an intended direction of travel of the host vehicle 9.

The vehicle wheel axle lateral acceleration estimation unit 5.1, 5.2, 5.3, 5.4 is arranged to estimate or measure a lateral acceleration of at least one vehicle wheel axle 13.1, 13.2 of the host vehicle 9 upon a detected occurrence of an impact having a magnitude higher than the predetermined threshold impact magnitude.

The vehicle wheel axle lateral acceleration estimation unit may comprise a lateral acceleration measuring unit 5.1, positioned in a region of a host vehicle front wheel axle 13.1 and/or a lateral acceleration measuring unit 5.2, positioned in a region of a host vehicle rear wheel axle 13.2. Such lateral acceleration measuring unit 5.1, 5.2 may be arranged to directly measure a lateral acceleration of at least one vehicle wheel axle 13.1, 13.2 of the host vehicle 9.

According to some embodiments, the vehicle wheel axle lateral acceleration estimation unit may comprise a first and a second lateral acceleration measuring unit, where the first lateral acceleration unit is arranged at a distance in the longitudinal direction y from the second lateral acceleration unit, where neither the first, nor the second lateral acceleration measuring unit may be arranged in a region in a front or rear wheel axle 13.1, 13.2 of the host vehicle 9. Instead, the first and the second lateral acceleration measuring units may be arranged to measure host vehicle lateral acceleration at their respective position and where the vehicle wheel axle lateral acceleration estimation unit is arranged to estimate lateral acceleration of a front and/or a rear vehicle wheel axle 13.1, 13.2 of the host vehicle 9 on the basis of measure host vehicle lateral acceleration at their respective position and an longitudinal distance from their respective position to the front and/or rear vehicle wheel axle 13.1, 13.2.

As an alternative, the vehicle wheel axle lateral acceleration estimation unit comprises a lateral acceleration measuring unit 5.1, 5.2, 5.3 arranged to measure a host vehicle lateral acceleration, and a yaw acceleration measuring unit 5.4 arranged to measure a host vehicle yaw acceleration. In such embodiments, the vehicle wheel axle lateral acceleration estimation unit is arranged to estimate lateral acceleration of at least one wheel axle 13.1, 13.2 of the host vehicle 9 on the basis of measured host vehicle 9 lateral acceleration, and host vehicle 9 yaw acceleration.

The yaw acceleration measuring unit 5.4 may comprise a yaw rate measuring unit providing a signal representative of host vehicle yaw rate where the signal representative of host vehicle yaw rate is derived to obtain a signal representative of yaw acceleration.

According to some embodiments, the vehicle wheel axle lateral acceleration estimation unit is arranged to estimate the lateral acceleration of at least one wheel axle 13.1, 13.2 of the host vehicle 9 through subtracting from a value representative of a measured host vehicle lateral acceleration a value representative of a product of a longitudinal distance 15.1, 15.2 between the lateral acceleration measuring 5.3 unit and the at least one wheel axle 13.1, 13.2 multiplied with measured host vehicle yaw acceleration.

According to some embodiments, the processing unit 7 is arranged to calculate an estimate of the host vehicle 9 tyre to road friction value of at least one wheel axle 13.1, 13.2 as a quota between the peak lateral acceleration estimate for that wheel axle 13.1, 13.2 and a gravitational constant.

Fig. 1 also illustrates a post impact vehicle control system 2 comprising a vehicle tyre to road friction value estimation arrangement 1 according to some embodiments. Such a post impact vehicle control system 2 may for example be a post impact vehicle path control system, or an anti-lock vehicle braking system (ABS), an Autonomous Emergency Braking system (AEB), or an Electronic Stability Control system (ESC), also referred to as dynamic stability control (DSC). Since such a post impact vehicle control system 2 comprises a vehicle tyre to road friction value estimation arrangement 1 according to some embodiments, a post impact control system 2 is provided with improved accuracy in an ability to estimate a host vehicle 9 tyre to road friction value. With the estimate of a host vehicle tyre to road friction value, the ability of the post impact vehicle control system 2 to avoid secondary impacts may be improved. As a result, overall vehicle occupant safety can be further improved.

Fig. 1 also illustrates a vehicle 9 comprising a post impact vehicle control system 2 according to some embodiments. Accordingly, a vehicle 9 is provided with improved accuracy in an ability to estimate a host vehicle 9 tyre to road friction value.

Fig. 2 illustrates a plot of lateral acceleration a_{y} of vehicle front wheel axle 13.1 of the host vehicle 9 versus time t during an impact with the external object 11 illustrated in Fig. 1. As can be seen in Fig. 2, the lateral acceleration a_{y} quickly rises in the beginning of the impact to a peak first peak 18 of the lateral acceleration a_{y} in a direction coinciding with the lateral direction y defined in Fig. 1, i.e. in a direction coinciding with a right direction in Fig. 1. When the magnitude of the impact decreases to a point where there are no contact forces between the object 11 and the host vehicle 9, a shift 17 in direction of lateral acceleration a_{y} of vehicle front wheel axle 13.1 occur. This can be seen in Fig. 2 in that the lateral acceleration assumes negative values in the lateral direction y defined in Fig. 1 after the shift 17 in direction. Further, as can be seen in Fig. 2, subsequent to the shift 17, a peak lateral acceleration 19 occurs. At this moment, tyre forces can be assumed to be saturated in the lateral direction y, and no other forces can be assumed to be acting on the vehicle. This is utilized by the arrangement 1 to provide an accurate estimation of a host vehicle 9 tyre to road friction value via the processing unit 7 being arranged to process the lateral acceleration signal to determine an occurrence of a shift in direction 17 of the estimated or measured lateral acceleration a_{y}, and upon determining an occurrence of such a shift in direction 17 of estimated or measured lateral acceleration a_{y}, process the lateral acceleration signal to obtain a subsequent peak lateral acceleration estimate 19 and to calculate an estimate of a host vehicle tyre to road friction value based on the thus obtained peak lateral acceleration estimate 19.

According to some embodiments, the vehicle impact detecting unit 3 is comprised in the vehicle wheel axle lateral acceleration estimation unit 5.1, 5.2, 5.3, 5.4. Accordingly, in such embodiments, the vehicle wheel axle lateral acceleration estimation unit 5.1, 5.2, 5.3, 5.4. is arranged to detect occurrence of an impact, having a magnitude higher than a predetermined threshold impact magnitude, between a vehicle 9 hosting the arrangement 1 and an external object 11, and to transmit an impact signal indicative of the occurrence of such an impact to the processing unit 7. Where the vehicle wheel axle lateral acceleration estimation unit 5.1, 5.2, 5.3, 5.4 is arranged to, upon a detected occurrence of such an impact, estimate or measure a lateral acceleration a_{y} of at least one vehicle wheel axle 13.1, 13.2 of the host vehicle 9. In such embodiments, the predetermined threshold impact magnitude may correspond to a host vehicle wheel axle lateral acceleration of approximately 1 g, i.e. approximately 9.8 m/s², of the front and/or the rear wheel axle 13.1, 13.2. Such lateral acceleration is illustrated in Fig. 2 by the dashed line 21 corresponding to a lateral acceleration of 9.8 m/s². Accordingly, in such embodiments, the vehicle wheel axle lateral acceleration estimation unit 5.1, 5.2, 5.3, 5.4 is arranged to transmit an impact signal indicative of the occurrence of an impact having a magnitude higher than a predetermined threshold impact magnitude to the processing unit 7 in case it is detected that lateral acceleration a_{y} of at least one vehicle wheel axle exceeds 9.8 m/s².

As illustrated in Fig. 2 an absolute value of the first peak 18 of the lateral acceleration a_{y} is greater than the subsequent peak lateral acceleration 19. This is due to external forces acting on the host vehicle 9 during the impact enabling the lateral acceleration to exceed approximately 9.8 m/s² in the first peak 18 of the lateral acceleration which would be impossible if only tyre forces where acting on the host vehicle 9. Also, the occurrence of the shift in direction 17 of the estimated or measured lateral acceleration a_{y} as can be seen in Fig. 2 would be impossible during normal driving of the host vehicle 9, i.e. if only tyre forces acts on the host vehicle. That is, the shift in direction 17 of the estimated or measured lateral acceleration a_{y} from the first peak 18 of the lateral acceleration a_{y} to the subsequent peak lateral acceleration 19 occurs in a shorter time than would be possible if only tyre forces where acting on the host vehicle 9. Both these facts can be utilized by the by the processing unit in the estimation of host vehicle tyre to road friction value.

That is, the processing unit may be arranged to only calculate an estimate of a host vehicle tyre to road friction value based on the thus obtained peak lateral acceleration estimate 19 in case the shift in direction 17 of the estimated or measured lateral acceleration a_{y} from the first peak 18 of the lateral acceleration a_{y} to the subsequent peak lateral acceleration 19 occurs in a time being shorter than a predetermined threshold time. The predetermined threshold time may be within the range 3-30 milliseconds.

Also, the processing unit may be arranged to only calculate an estimate of a host vehicle tyre to road friction value based on the thus obtained peak lateral acceleration estimate 19 in case a proportion between the first peak 18 of the lateral acceleration a_{y} and the subsequent peak lateral acceleration 19 is greater than a predetermined proportion value. Such predetermined proportion value may be approximately 2.

In case a proportion between the first peak 18 of the lateral acceleration a_{y} and the subsequent peak lateral acceleration 19 is smaller than the predetermined proportion value or in case the shift in direction 17 of the estimated or measured lateral acceleration a_{y} from the first peak 18 of the lateral acceleration a_{y} to the subsequent peak lateral acceleration 19 occurs in a time being longer than the predetermined threshold time, tyre forces can be assumed to be unsaturated. Therefore, in these embodiments, the accuracy of the vehicle tyre to road friction value estimation arrangement is further improved.

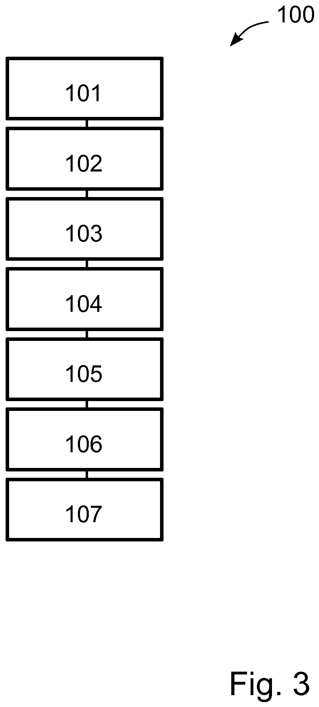

Fig. 3 illustrates a method 100 of estimating a vehicle tyre to road friction value using a vehicle tyre to road friction value estimation arrangement comprising a vehicle impact detecting unit, and a vehicle wheel axle lateral acceleration estimation unit, and a processing unit, where the method 100 comprises;
- detecting 101 occurrence of an impact, having a magnitude higher than a predetermined threshold impact magnitude, between a vehicle hosting the arrangement and an external object, using the vehicle impact detecting unit, and
- transmitting 102 an impact signal indicative of the occurrence of such an impact to the processing unit, and
- estimating 103 or measuring a lateral acceleration of at least one vehicle wheel axle of the host vehicle, upon a detected occurrence of such an impact, using the vehicle wheel axle lateral acceleration estimation unit, and
- transmitting 104 a lateral acceleration signal indicative of the estimated or measured lateral acceleration to the processing unit, and
- processing 105 the lateral acceleration signal to determine an occurrence of a shift in direction of the estimated or measured lateral acceleration, using the processing unit, and
- processing 106 the lateral acceleration signal to obtain a subsequent peak lateral acceleration estimate upon determining an occurrence of such a shift in direction of the estimated or measured lateral acceleration, using the processing unit, and
- calculating 107 an estimate of a host vehicle tyre to road friction value based on the thus obtained peak lateral acceleration estimate, using the processing unit.

It is to be understood that the foregoing is illustrative of various example embodiments and the invention is not to be limited to the specific embodiments disclosed and that modifications to the disclosed embodiments, combinations of features of disclosed embodiments as well as other embodiments are intended to be included within the scope of the appended claims.

## Claims

1. A vehicle tyre to road friction value estimation arrangement (1) comprising;
- a vehicle impact detecting unit (3),
- a vehicle wheel axle lateral acceleration estimation unit (5.1, 5.2, 5.3, 5.4), and
- a processing unit (7),
where the vehicle impact detecting unit (3) is arranged to detect occurrence of an impact, having a magnitude higher than a predetermined threshold impact magnitude, between a vehicle (9) hosting the arrangement (1) and an external object (11), and to transmit an impact signal indicative of the occurrence of such an impact to the processing unit (7), **characterized in that** the vehicle wheel axle lateral acceleration estimation unit (5.1, 5.2, 5.3, 5.4) is arranged to, upon a detected occurrence of such an impact, estimate or measure a lateral acceleration (a_{y}) of at least one vehicle wheel axle (13.1, 13.2) of the host vehicle (9), and to transmit a lateral acceleration signal indicative of the estimated or measured lateral acceleration (a_{y}) to the processing unit (7), where the processing unit (7) is arranged to process the lateral acceleration signal to determine an occurrence of a shift in direction (17) of the estimated or measured lateral acceleration (a_{y}), and upon determining an occurrence of such a shift in direction (17) of estimated or measured lateral acceleration (a_{y}), process the lateral acceleration signal to obtain a subsequent peak lateral acceleration estimate (19) and to calculate an estimate of a host vehicle tyre to road friction value based on the thus obtained peak lateral acceleration estimate (19).

2. The vehicle tyre to road friction value estimation arrangement (1) according to claim 1 where the vehicle wheel axle lateral acceleration estimation unit comprises a lateral acceleration measuring unit (5.3) arranged to measure a host vehicle (9) lateral acceleration, and a yaw acceleration measuring unit (5.4) arranged to measure a host vehicle (9) yaw acceleration.

3. The vehicle tyre to road friction value estimation arrangement (1) according to claim 2 where the vehicle wheel axle lateral acceleration estimation unit is arranged to estimate the lateral acceleration of at least one wheel axle (13.1, 13.2) of the host vehicle (9) through subtracting from a value representative of a measured host vehicle (9) lateral acceleration a value representative of a product of a longitudinal distance (15.1, 15.2) between the lateral acceleration measuring unit (5.3) and the at least one wheel axle (13.1, 13.2) multiplied with measured host vehicle (9) yaw acceleration.

4. The vehicle tyre to road friction value estimation arrangement (1) according to any one of claims 1-3 where the processing unit (7) is arranged to calculate an estimate of the host vehicle tyre to road friction value of at least one wheel axle (13.1, 13.2) as a quota between the peak lateral acceleration estimate (19) for that wheel axle (13.1, 13.2) and a gravitational constant.

5. A post impact vehicle control system (2) comprising a vehicle tyre to road friction value estimation arrangement (1) according to any one of the claims 1-4.

6. A vehicle (9) comprising a post impact vehicle control system (2) according to claim 5.

7. A method (100) of estimating a vehicle tyre to road friction value using a vehicle tyre to road friction value estimation arrangement (1) comprising a vehicle impact detecting unit (3), and a vehicle wheel axle lateral acceleration estimation unit (5.1, 5.2, 5.3, 5.4), and a processing unit (7), where the method (100) comprises;
- detecting (101) occurrence of an impact, having a magnitude higher than a predetermined threshold impact magnitude, between a vehicle (9) hosting the arrangement (1) and an external object (11), using the vehicle impact detecting unit (3), and
- transmitting (102) an impact signal indicative of the occurrence of such an impact to the processing unit (7), **characterized in that** the method (100) further comprises
- estimating (103) or measuring a lateral acceleration (a_{y}) of at least one vehicle wheel axle (13.1, 13.2) of the host vehicle (9), upon a detected occurrence of such an impact, using the vehicle wheel axle lateral acceleration estimation unit (5.1, 5.2, 5.3, 5.4), and
- transmitting (104) a lateral acceleration signal indicative of the estimated or measured lateral acceleration (a_{y}) to the processing unit (7), and
- processing (105) the lateral acceleration signal to determine an occurrence of a shift in direction (17) of the estimated or measured lateral acceleration (a_{y}), using the processing unit (7), and
- processing (106) the lateral acceleration signal to obtain a subsequent peak lateral acceleration estimate (19) upon determining an occurrence of such a shift in direction (17) of the estimated or measured lateral acceleration (a_{y}), using the processing unit, and
- calculating (107) an estimate of a host vehicle tyre to road friction value based on the thus obtained peak lateral acceleration estimate (19), using the processing unit (7).

## Patentansprüche

1. Anordnung (1) zur Schätzung des Reibwerts zwischen Fahrzeugreifen und Straße, umfassend:
- eine Fahrzeugaufprallerkennungseinheit (3),
- eine Schätzungseinheit (5.1, 5.2, 5.3, 5.4) für die Querbeschleunigung der Fahrzeugradachse, und
- eine Verarbeitungseinheit (7),
wobei die Fahrzeugaufprallerkennungseinheit (3) vorgesehen ist, um das Auftreten eines Aufpralls mit einer Größenordnung, die über einem vorbestimmten Schwellenwert der Größenordnung des Aufpralls liegt, zwischen einem Fahrzeug (9), das als Host für die Anordnung (1) dient, und einem externen Objekt (11) zu detektieren, und ein Aufprallsignal, welches das Auftreten eines derartigen Aufpralls angibt, an die Verarbeitungseinheit (7) zu übertragen, **dadurch gekennzeichnet, dass** die Schätzungseinheit (5.1, 5.2, 5.3, 5.4) für die Querbeschleunigung der Fahrzeugradachse vorgesehen ist, um nach einem detektierten Auftreten eines derartigen Aufpralls eine Querbeschleunigung (a_{y}) von mindestens einer Fahrzeugradachse (13.1, 13.2) des Host-Fahrzeugs (9) zu schätzen oder zu messen und ein Querbeschleunigungssignal, welches die geschätzte oder gemessene Querbeschleunigung (a_{y}) angibt, an die Verarbeitungseinheit (7) zu übertragen, wobei die Verarbeitungseinheit (7) vorgesehen ist, um das Querbeschleunigungssignal zu verarbeiten, um ein Auftreten einer Verschiebung der Richtung (17) der geschätzten oder gemessenen Querbeschleunigung (a_{y}) zu bestimmen, und beim Bestimmen eines Auftretens einer derartigen Verschiebung der Richtung (17) der geschätzten oder gemessenen Querbeschleunigung (a_{y}) das Querbeschleunigungssignal zu verarbeiten, um eine nachfolgende Schätzung (19) des Spitzenwerts der Querbeschleunigung zu erhalten und eine Schätzung eines Reibwerts zwischen Host-Fahrzeugreifen und Straße zu berechnen, der auf der so erhaltenen Schätzung (19) des Spitzenwert der Querbeschleunigung basiert.

2. Anordnung (1) zur Schätzung des Reibwerts zwischen Fahrzeugreifen und Straße nach Anspruch 1, wobei die Schätzungseinheit für die Querbeschleunigung der Fahrzeugradachse eine Messeinheit (5.3) der Querbeschleunigung, die zum Messen der Querbeschleunigung eines Host-Fahrzeugs (9) vorgesehen ist, und eine Messeinheit (5.4) für die Gierbeschleunigung umfasst, die zum Messen der Gierbeschleunigung eines Host-Fahrzeugs (9) vorgesehen ist.

3. Anordnung (1) zur Schätzung des Reibwerts zwischen Fahrzeugreifen und Straße nach Anspruch 2, wobei die Schätzungseinheit für die Querbeschleunigung der Fahrzeugradachse vorgesehen ist, um die Querbeschleunigung von mindestens einer Fahrzeugradachse (13.1, 13.2) des Host-Fahrzeugs (9) zu schätzen, indem von einem Wert, der für eine gemessene Querbeschleunigung eines Host-Fahrzeugs (9) repräsentativ ist, ein Wert subtrahiert wird, der für ein Produkt eines Längsabstands (15.1, 15.2) zwischen der Messeinheit (5.3) für die Querbeschleunigung und der mindestens einen Fahrzeugradachse (13.1, 13.2), multipliziert mit der gemessenen Gierbeschleunigung des Host-Fahrzeugs (9), repräsentativ ist.

4. Anordnung (1) zur Schätzung des Reibwerts zwischen Fahrzeugreifen und Straße nach einem der Ansprüche 1 bis 3, wobei die Verarbeitungseinheit (7) vorgesehen ist, um eine Schätzung des Reibwerts zwischen Host-Fahrzeugreifen und Straße von mindestens einer Fahrzeugradachse (13.1, 13.2) als Quote zwischen der Schätzung (19) des Spitzenwerts der Querbeschleunigung für jene Fahrzeugradachse (13.1, 13.2) und einer Gravitationskonstante zu berechnen.

5. Nach einem Aufprall wirkendes Fahrzeugsteuerungssystem (2), umfassend eine Anordnung (1) zur Schätzung des Reibwerts zwischen Fahrzeugreifen und Straße gemäß einem der Ansprüche 1 bis 4.

6. Fahrzeug (9), umfassend ein nach einem Aufprall wirkendes Fahrzeugsteuerungssystem (2) gemäß Anspruch 5.

7. Verfahren (100) zur Schätzung des Reibwerts zwischen Fahrzeugreifen und Straße unter Verwendung einer Anordnung (1) zur Schätzung des Reibwerts zwischen Fahrzeugreifen und Straße, umfassend eine Fahrzeugaufpralldetektierungseinheit (3) und eine Schätzungseinheit (5.1, 5.2, 5.3, 5.4) für die Querbeschleunigung der Fahrzeugradachse und eine Verarbeitungseinheit (7), wobei das Verfahren (100) umfasst:
- Detektieren (101) des Auftretens eines Aufpralls mit einer Größenordnung, die höher als ein vorbestimmter Schwellenwert der Größenordnung eines Aufpralls ist, zwischen einem Fahrzeug (9), welches als Host für die Anordnung (1) dient, und einem externen Objekt (11) unter Verwendung der Fahrzeugaufpralldetektierungseinheit (3) und
- Übertragen (102) eines Aufprallsignals, welches das Auftreten eines derartigen Aufpralls angibt, an die Verarbeitungseinheit (7), **dadurch gekennzeichnet, dass** das Verfahren (100) ferner umfasst:
- Schätzen (103) oder Messen einer Querbeschleunigung (a_{y}) von mindestens einer Fahrzeugradachse (13.1, 13.2) des Host-Fahrzeugs (9) nach einem detektierten Auftreten eines derartigen Aufpralls unter Verwendung der Schätzungseinheit (5.1, 5.2, 5.3, 5.4) für die Querbeschleunigung der Fahrzeugradachse, und
- Übertragen (104) eines Querbeschleunigungssignals, das die geschätzte oder gemessene Querbeschleunigung (a_{y}) angibt, an die Verarbeitungseinheit (7), und
- Verarbeiten (105) des Querbeschleunigungssignals unter Verwendung der Verarbeitungseinheit (7), um ein Auftreten einer Verschiebung der Richtung (17) der gemessenen oder geschätzten Querbeschleunigung (a_{y}) zu bestimmen, und
- Verarbeiten (106) des Querbeschleunigungssignals unter Verwendung der Verarbeitungseinheit, um eine anschließende Schätzung (19) des Spitzenwerts der Querbeschleunigung nach dem Bestimmen eines Auftretens einer solchen Verschiebung in Richtung (17) der geschätzten oder gemessenen Querbeschleunigung (a_{y}) zu erhalten, und
- Berechnen (107) einer Schätzung eines Reibwerts zwischen dem Host-Fahrzeugreifen und der Straße basierend auf der so erhaltenen Schätzung (19) des Spitzenwerts der Querbeschleunigung unter Verwendung der Verarbeitungseinheit (7).

## Revendications

1. Agencement (1) d'estimation de la valeur du frottement de pneus d'un véhicule avec une route, comportant :
- une unité (3) de détection d'impact de véhicule,
- une unité (5.1, 5.2, 5.3, 5.4) d'estimation d'accélération latérale d'essieu à roues de véhicule, et
- une unité (7) de traitement, l'unité (3) de détection d'impact de véhicule étant agencée pour détecter la survenue d'un impact, présentant une amplitude supérieure à une amplitude seuil prédéterminée d'impact, entre un véhicule (9) hébergeant l'agencement (1) et un objet externe (11), et pour envoyer un signal d'impact indicatif de la survenue d'un tel impact à l'unité (7) de traitement, **caractérisé en ce que** l'unité (5.1, 5.2, 5.3, 5.4) d'estimation d'accélération latérale d'essieu à roues de véhicule est agencée pour, suite à la survenue détectée d'un tel impact, estimer ou mesurer une accélération latérale (a_{y}) d'au moins un essieu (13.1, 13.2) à roues de véhicule du véhicule hôte (9), et pour envoyer un signal d'accélération latérale indicatif de l'accélération latérale estimée ou mesurée (a_{y}) à l'unité (7) de traitement, l'unité (7) de traitement étant agencée pour traiter le signal d'accélération latérale afin de déterminer la survenue d'un changement de direction (17) de l'accélération latérale estimée ou mesurée (a_{y}), et suite à la détermination de la survenue d'un tel changement de direction (17) de l'accélération latérale estimée ou mesurée (a_{y}), traiter le signal d'accélération latérale pour obtenir une estimation subséquente (19) d'accélération latérale de crête et pour calculer une estimation d'une valeur de frottement des pneus du véhicule hôte avec la route d'après l'estimation (19) d'accélération latérale de crête ainsi obtenue.

2. Agencement (1) d'estimation de la valeur du frottement de pneus d'un véhicule avec une route selon la revendication 1, l'unité d'estimation d'accélération latérale d'essieu à roues de véhicule comportant une unité (5.3) de mesure d'accélération latérale agencée pour mesurer une accélération latérale du véhicule hôte (9), et une unité (5.4) de mesure d'accélération en lacet agencée pour mesurer une accélération en lacet du véhicule hôte (9).

3. Agencement (1) d'estimation de la valeur du frottement de pneus d'un véhicule avec une route selon la revendication 2, l'unité d'estimation d'accélération latérale d'essieu à roues de véhicule étant agencée pour estimer l'accélération latérale d'au moins un essieu (13.1, 13.2) à roues du véhicule hôte (9) en soustrayant d'une valeur représentative d'un accélération latérale mesurée du véhicule hôte (9) une valeur représentative d'un produit d'une distance longitudinale (15.1, 15.2) entre l'unité (5.3) de mesure d'accélération latérale et l'essieu ou les essieux (13.1, 13.2) à roues multipliée par l'accélération en lacet mesurée du véhicule hôte (9).

4. Agencement (1) d'estimation de la valeur du frottement de pneus d'un véhicule avec une route selon l'une quelconque des revendications 1 à 3, l'unité (7) de traitement étant agencée pour calculer une estimation de la valeur du frottement de pneus du véhicule hôte avec la route d'au moins un essieu (13.1, 13.2) à roues comme un quotient entre l'estimation (19) d'accélération latérale de crête pour l'essieu (13.1, 13.2) à roues en question et une constante de gravitation.

5. Système (2) de commande de véhicule après impact comportant un agencement (1) d'estimation de la valeur du frottement de pneus d'un véhicule avec une route selon l'une quelconque des revendications 1 à 4.

6. Véhicule (9) comportant un système (2) de commande de véhicule après impact selon la revendication 5.

7. Procédé (100) d'estimation de la valeur du frottement de pneus d'un véhicule avec une route à l'aide d'un agencement (1) d'estimation de la valeur du frottement de pneus d'un véhicule avec une route comportant une unité (3) de détection d'impact de véhicule, et une unité (5.1, 5.2, 5.3, 5.4) d'estimation d'accélération latérale d'essieu à roues de véhicule, et une unité (7) de traitement, le procédé (100) comportant les étapes consistant à :
- détecter (101) la survenue d'un impact, présentant une amplitude supérieure à une amplitude seuil prédéterminée d'impact, entre un véhicule (9) hébergeant l'agencement (1) et un objet externe (11), à l'aide de l'unité (3) de détection d'impact de véhicule, et
- envoyer (102) un signal d'impact indicatif de la survenue d'un tel impact à l'unité (7) de traitement, **caractérisé en ce que** le procédé (100) comporte en outre les étapes consistant à
- estimer (103) ou mesurer une accélération latérale (a_{y}) d'au moins un essieu (13.1, 13.2) à roues de véhicule du véhicule hôte (9), suite à la survenue détectée d'un tel impact, à l'aide de l'unité (5.1, 5.2, 5.3, 5.4) d'estimation d'accélération latérale d'essieu à roues de véhicule, et
- envoyer (104) un signal d'accélération latérale indicatif de l'accélération latérale estimée ou mesurée (a_{y}) à l'unité (7) de traitement, et
- traiter (105) le signal d'accélération latérale pour déterminer la survenue d'un changement de direction (17) de l'accélération latérale estimée ou mesurée (a_{y}), à l'aide de l'unité (7) de traitement, et
- traiter (106) le signal d'accélération latérale pour obtenir une estimation subséquente (19) d'accélération latérale de crête suite à la détermination de la survenue d'un tel changement de direction (17) de l'accélération latérale estimée ou mesurée (a_{y}), à l'aide de l'unité de traitement, et
- calculer (107) une estimation d'une valeur de frottement des pneus du véhicule hôte avec la route d'après l'estimation (19) d'accélération latérale de crête ainsi obtenue, à l'aide de l'unité (7) de traitement.
